# EUROPÄISCHE PATENTANMELDUNG

(11) **EP 4 471 636 A1**
(43) Veröffentlichungstag der Anmeldung: **04.12.2024**
(21) Anmeldenummer: 23175965.5
(22) Anmeldetag: 30.05.2023
(51) Int. Cl.: G06F 21/57, G06F 21/44, H04L 9/32

(54) **KOMBINATION VON ATTESTIERUNGSERGEBNISSEN EINES APP-FÄHIGEN SYSTEMS**

(71) Anmelder: Siemens Aktiengesellschaft, 80333 München (DE)
(72) Erfinder: Falk, Rainer, 85435 Erding (DE); Feist, Christian Peter, 80689 München (DE); Hornung, Peter, 91054 Erlangen (DE); Mantel, Martin, 91325 Adelsdorf (DE); Pyka, Stefan, 85570 Markt Schwaben (DE); Sperl, Franz, 92526 Oberviechtach (DE); Zeschg, Thomas, 81543 München (DE)
(74) Vertreter: Siemens Patent Attorneys

(57) **Zusammenfassung**

Die Erfindung betrifft eine Attestierungskombinationskomponente (132) für ein app-fähiges System (1), aufweisend:
- eine Empfangseinheit, ausgebildet mindestens zwei Attestierungsergebnisse (1331) zu empfangen,
wobei die mindestens zwei Attestierungsergebnisse (1331):
- jeweils einen Vertrauenswürdigkeitszustand einer App (11) von mindestens zwei Apps (11) des app-fähigen Sys-tems (1) attestieren,
- jeweils nach einer Attestierungsrichtlinie attestieren und erzeugt wurden, wobei die jeweilige Attestierungsrichtlinie spezifisch für jene App (11) der mindestens zwei Apps (11), deren Vertrauenswürdigkeitszustand at-testiert wird, bereitgestellt wurde, und
- jeweils den Vertrauenswürdigkeitszustand unterschiedlicher Apps (11) der mindestens zwei Apps (11) attestie-ren, und
- eine Kombinationseinheit, ausgebildet die mindestens zwei Attestierungsergebnisse (1331) zu einem Attestierungsgesamtergebnis (133) zu kombinieren.

Außerdem betrifft die Erfindung ein übergeordnetes Attestierungssystem, ein übergeordnetes app-fähiges System, und ein zugehöriges Verfahren.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft eine Attestierungskombinationskomponente für ein app-fähiges System. Außerdem betrifft die Erfindung ein übergeordnetes Attestierungssystem, ein übergeordnetes app-fähiges System, und ein zugehöriges Verfahren.

### Beschreibung des Stands der Technik

Durch die zunehmende Vernetzung, u.a. in industriellen Anwendungen, sowie dem Bedarf, größere Datenmengen für die Optimierung von Herstellungsprozessen lokal zu verarbeiten, werden industrielle Geräte zunehmend flexibel hinsichtlich ihrer Funktionalität gestaltet. Dies wird insbesondere durch das Verwenden von nachladbaren Applikationen ermöglicht, mit denen die Gerätefunktionalität auch im Feld einfach und schnell angepasst werden kann.

Dabei soll dem Kunden ein möglichst breites Spektrum an nachladbaren Applikationen, auch als Apps bezeichenbar, angeboten werden. Als Folge eines möglichst breiten Angebots können Applikationen insbesondere von unterschiedlichen Herstellern (z.B. Gerätehersteller, Drittanbieter) stammen, unterschiedliche Formate (insbesondere Docker Container, Debian Pakete, einfaches tar-Archiv) annehmen, sowie eine unterschiedlich tiefe Integration mit dem System (insbesondere eingeschränkte Rechte, sehr invasive Rechte) voraussetzen.

Somit werden stärkere Anforderungen an die Security-Mechanismen eines solchen Gerätes, auf welchem die Apps laufen, gestellt. Insbesondere setzt ein sicherer Betrieb einen bekannten (d.h. erwarteten) und vertrauenswürdigen (insbesondere von einer Richtlinie vorgegeben) Zustand des Gerätes voraus, sowie die Meldung und Überprüfung dieses Zustandes. Herausfordernd ist allerdings in den o.g. Szenarien, dass dieser Zustand durch mehrere Stakeholder definiert und beeinflusst wird, z.B. durch den Software- und/oder Hardware-Lieferanten, und/oder Maschinen-/Gerätebauer mit eigener Hardware und Software-Zulieferungen, Instandsetzung und Betreiber, die weitere Apps (selbstgeschrieben durch den Kunden/Geräteanwender, oder aus einem App-Store von Drittanbietern bezogen) auf das Gerät laden und parametrieren. Bekannte Attestierungslösungen arbeiten zudem mit einer sehr starren Richtlinie, gegen die der Zustand geprüft wird oder sie bestätigen eine Rohinformation, welche von den einzelnen Apps bereitgestellt wird, die eine komplexe Auswertung erfordert.

Es ist bekannt, generell die Integrität von kritischen Systemressourcen (z.B. Dateien, Prozesse, Read-Only Speicherbereiche einer PLC) zur Laufzeit zu überprüfen. Dies ist als "Runtime Health Check Funktionalität" bezeichenbar. Diese Funktionalität kann insbesondere als eigenständiger Prozess auf einem Gerät (Health Check Agent) oder durch einen Task auf einem Echtzeitbetriebssystem realisiert sein. Die Prüfung findet dabei durch Abgleich mit einer Überwachungsrichtlinie (insbesondere "original equipment manufacturer (OEM) Policy", Betreiber-Policy) statt. In einem Regelsatz kann dabei insbesondere definiert werden, wie auf erkannte Abweichungen reagiert werden soll (insbesondere Setzen eines Schaltsignals, Übermitteln einer Log-Nachricht, etc.).

Es ist außerdem eine sog. Remote-Attestierung (engl. "remote attestation") bekannt, wodurch einem Teilnehmer, auch als "Peer" bezeichenbar, Informationen zu einem Gerät/System bereitgestellt werden, anhand derer er verifizieren kann, ob sich das Gerät oder System in einem erwarteten (insb. vertrauenswürdigen) Zustand befindet. Prinzipiell kann eine Remote-Attestierung rein in Software erfolgen. Die Hinzunahme von Hardware-Security Mechanismen ist jedoch üblich, um Integrität und Authentizität der übermittelten Informationen sicherzustellen. Dies ist insbesondere vorteilhaft im Zusammenhang mit Measured Boot und einem Trusted Platform Module (TPM). Dabei berechnet, ausgehend von einer "root-of-trust", jede Boot-Komponente eine kryptographische Prüfsumme der nächsten Boot-Komponente. Die Prüfsummen können anschließend insbesondere in einem TPM in speziellen Registern, sog. Platform Configuration Registers (PCRs), abgespeichert werden. Die Liste an PCR-Werten kann zudem mit einem im TPM gespeicherten und nicht extrahierbaren privaten Schlüssel signiert und zusammen mit der Signatur anschließend an eine andere Instanz (insbesondere einem Server) zur Überprüfung weitergegeben werden. Der Zugang des Gerätes zu einem Service oder allgemein zu einem Netzwerk kann so in Abhängigkeit der gemessenen Boot-Komponenten kontrolliert werden. Weitere Beispiele für Basis-Technologien, die eine Remote-Attestierung als Teilfunktionalität bereitstellen, sind z.B. Intel SGX, AMD SEV, Intel TDX.

Aus dem Blockchain-Umfeld sind Smart Contracts bekannt. Dabei handelt es sich um Programmlogik/Programm-Code, der vor der Bestätigung einer Transaktion in einem Block der Blockkette ausgeführt wird. Dieser enthält ein Regelwerk und führt Prüfungen der Transaktions-Gegenstände und -Bedingungen durch. Werden die Bedingungen des Smart Contracts erfüllt, wird die Transaktion in einem Block der Blockkette als gültig bestätigt. Andernfalls wird sie abgelehnt. Smart Contracts können insbesondere als Code, der Teil einer Blockchain ist, realisiert werden.

Die Aufgabe der Erfindung besteht darin, eine Lösung für eine verbesserte Attestierung eines Zustands hinsichtlich Vertrauenswürdigkeit eines app-fähigen technischen Systems, bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Attestierungskombinationskomponente für ein app-fähiges System, aufweisend:
- eine Empfangseinheit, ausgebildet mindestens zwei Attestierungsergebnisse zu empfangen,
wobei die mindestens zwei Attestierungsergebnisse:
- jeweils einen Vertrauenswürdigkeitszustand einer App von mindestens zwei Apps des app-fähigen Systems attestie-ren,
- jeweils nach einer Attestierungsrichtlinie attestieren und erzeugt wurden, wobei die jeweilige Attestierungsrichtlinie spezifisch für jene App der mindestens zwei Apps, deren Vertrauenswürdigkeitszustand attestiert wird, bereitgestellt wurde, und
- jeweils den Vertrauenswürdigkeitszustand unterschiedlicher Apps der mindestens zwei Apps attestieren,
   und
- eine Kombinationseinheit, ausgebildet die mindestens zwei Attestierungsergebnisse zu einem Attestierungsgesamtergebnis zu kombinieren.

Die Attestierungskombinationskomponente ist auch als eine "Attestation Result Composition Logic (ARCL) Component" bezeichenbar.

Die mindestens zwei Apps stammen insbesondere von unterschiedlichen Akteuren. Die Akteure sind auch als Stakeholder bezeichenbar und insbesondere ausgebildet als (Geräte)hersteller, Gerätebauer (OEM), Betreiber (Operator), und/oder Integrator, jeweils des app-fähigen Systems.

Das app-fähige System ist ausgebildet Apps auszuführen. Es weist eine Ausführungsumgebung, auch als Laufzeitumgebung bezeichenbar, für Apps aus. Die Apps sind auch als Anwendungen und/oder Applikationen bezeichenbar. Eine App bestimmt insbesondere eine funktionale Konfiguration des app-fähigen Systems. Die Apps sind insbesondere auf das app-fähige System von einem Anwender nachladbar. Die Attestierungskombinationskomponente ist für ein app-fähiges System aufweisend die mindestens zwei Apps ausgebildet. Das app-fähige System ist insbesondere ein app-fähiges Gerät.

Die mindestens zwei Attestierungsergebnisse resultieren aus einer Attestierung des Vertrauenswürdikeitszustands der jeweiligen App der mindestens zwei Apps.Die mindestens zwei Attestierungsergebnisse attestieren jeweils das Ergebnis einer Attestierung der jeweiligen App der mindesten zwei Apps. Das Ergebnis der Attestierung gibt Aussage über den genannten Vertrauenswürdigkeitszustand der jeweiligen App.

Der Vertrauenswürdigkeitszustand der jeweiligen App ist als ein Zustand hinsichtlich und/oder bezüglich einer Vertrauenswürdigkeit der jeweiligen App zu verstehen. Vertrauenswürdigkeit bedeutet, dass die App bestimmte technische Eigenschaften aufweist, die darauf schließen lassen, dass sie sich in dem bereitgestellten bzw. erwarteten Zustand befindet und somit auf ein korrektes Verhalten der App angenommen werden kann. der App Vertrauen entgegengebracht wird. Eine Aussage über den Vertrauenswürdigkeitszustand der jeweiligen App ist von Vorteil, da insbesondere ein sicherer Betrieb des Systems einen vertrauenswürdigen Zustand des Systems voraussetzt, sowie insbesondere eine Überprüfung und eine Meldung dieses Vertrauenswürdigkeitszustandes. Der Vertrauenswürdigkeitszustand wird nach der Attestierungsrichtlinie bewertet, erzeugt und attestiert. Die Attestierungsrichtlinie gibt somit insbesondere Kriterien vor, unter welchen Bedingungen einer App Vertrauen entgegengebracht wird und unter welchen Bedingungen einer App kein Vertrauen entgegengebracht wird.

Die jeweilige Attestierungsrichtlinie wurde spezifisch für jede App der mindestens zwei Apps, deren Vertrauenswürdigkeitszustand attestiert wird, bereitgestellt. Die jeweilige Attestierungsrichtlinie wird somit für jede App der mindestens zwei Apps, deren Vertrauenswürdigkeitszustand attestiert wird, verwendet. Für andere Apps der mindestens zwei Apps werden Attestierungsergebnisse nach insbesondere anderen, unterschiedlichen Attestierungsrichtlinien erstellt. Die mindestens zwei Attestierungsergebnisse sind somit jeweils ebenfalls spezifisch für jede App der mindestens zwei Apps und betreffen nur den Vertrauenswürdigkeitszustand der jeweiligen App.

Alternativ kann ein Hersteller (insbesondere OEM) für Apps, welche von ihm bereitgestellt werden, auch übergreifende, für mehrere seiner Apps geltende Attestierungsrichtlinien bereitstellen. Die Attestierungsrichtlinien sind aber weiterhin spezifisch für ausgewählte Apps und vom Hersteller vorgegeben.

Außerdem werden für jede App der mindestens zwei Apps unterschiedliche Attestierungsrichtlinien verwendet. Durch die mindestens zwei Attestierungsergebnisse wird erfindungsgemäß jeweils der Vertrauenswürdigkeitszustand unterschiedlicher Apps der mindestens zwei Apps attestiert. Dies hat den Vorteil, dass die Attestierungsrichtlinien flexibel und nach Bedarf der einzelnen Akteure gestaltbar sind. Insbesondere werden die Attestierungsrichtlinien von dem Bereitsteller der jeweiligen App vorgegeben. Die Akteure sind auch als Stakeholder bezeichenbar und insbesondere ausgebildet als Hersteller, Gerätebauer (OEM), Betreiber (Operator), und/oder Integrator, jeweils des app-fähigen Systems.

Das Attestierungsgesamtergebnis bezieht sich nicht unbedingt auf das "gesamte" app-fähige System. Das Attestierungsgesamtergebnis bezieht sich auf die Gesamtheit des app-fähigen Systems zu der Attestierungsergebnisse, welche jeweils einen Vertrauenswürdigkeitszustand einer App von mindestens zwei Apps des app-fähigen Systems attestieren, vorliegen. Das Attestierungsgesamtergebnis gibt somit Aussage über den Vertrauenswürdigkeitszustand einzelner Teilbereiche des app-fähige Systems oder über dessen Gesamtzustand.

Das Attestierungsgesamtergebnis ist auch als eine modulare Attestierung bezeichenbar, da sie Attestierungsergebnisse von einzelnen Modulen des app-fähigen Systems umfasst und/oder kombiniert. Auch ist das Attestierungsgesamtergebnis deshalb als eine kombinierte Attestierung bezeichenbar.

Das "Kombinieren" durch die Kombinationseinheit kann auch als ein Zusammenfassen und/oder Aggregieren der mindestens zwei Attestierungsergebnisse betrachtet werden. Dadurch wird jeweils das Attestierungsgesamtergebnis generiert.

Die Erfindung adressiert in einer Ausführungsform insbesondere die Herausforderung, dass der Gerätezustand einer app-fähigen Automatisierungskomponente durch mehrere Akteure/Stakeholder definiert und beeinflusst wird, z.B. durch Software- und/oder Hardware-Lieferanten, Maschinen-/Gerätebauer mit eigener Hardware und Software-Zulieferung, Instandsetzung, und Betreiber, die eigene Apps und/oder Ökosystem Apps auf das Gerät laden und parametrieren. Bekannte Attestierungslösungen hingegen arbeiten mit einer nur sehr starren Richtlinie (z.B. Stand der gesamten Gerätesoftware), gegen die der Zustand geprüft werden kann.

Daher wird vorgeschlagen, eine modulare und kombinierte Attestierung eines Gerätezustandes durch das Attestierungsgesamtergebnis zu realisieren. Dabei können einzelne Stakeholder eigene Attestierungsfunktionen (auch als Attestierungsteilkomponenten bezeichenbar) als Teil der Gerätesoftware bereitstellen, deren Ergebnisse aggregiert werden können. Somit ergibt sich die Möglichkeit, die Attestierungsrichtlinien flexibel und nach Bedarf der einzelnen Stakeholder zu gestalten und eine Aussage bzgl. der Vertrauenswürdigkeit von sowohl einzelnen Teilen eines Gerätes wie auch des Gesamtzustandes abzuleiten.

In einer Weiterbildung der Erfindung weisen die mindestens zwei Attestierungsergebnisse jeweils einen ersten kryptographischen Schutz auf.

In einer Variante sind die mindestens zwei Attestierungsergebnisse jeweils kryptographisch signiert, insbesondere mittels eines Akteur-/Stakeholder-spezifischen Schlüssels. Der Schlüssel wurde insbesondere im Rahmen einer Systemkonfiguration und/oder eines System-Onboardings auf das app-fähige System geladen, bzw. auf diesem erzeugt. Denkbar ist auch, dass beim Laden einer Komponente, welche ausgebildet ist, das jeweilige Attestierungsergebnis zu erstellen, ein für diese spezifischer Schlüssel auf dem app-fähigen System erzeugt und dieser bereitgestellt wird. Die Komponente, welche ausgebildet ist, das jeweilige Attestierungsergebnis zu erstellen, ist auch als Attestierungsteilkomponente bezeichenbar.

In einer weiteren Weiterbildung der Erfindung wurden die mindestens zwei Attestierungsergebnisse:
- jeweils von einer Attestierungsteilkomponente erzeugt, wobei die jeweilige Attestierungsrichtlinie, welche spezifisch für jede App der mindestens zwei Apps bereitge-stellt wurde, der Attestierungsteilkomponente zugeordnet ist.

Die Attestierungsteilkomponente, auch als Attestierungsfunktion bezeichenbar, ist insbesondere als ein Programmcode ausgebildet das jeweilige Attestierungsergebnis zu erstellen. Die Attestierungsteilkomponente/Attestierungsfunktion wird insbesondere von einer Komponente, welche ausgebildet ist, das jeweilige Attestierungsergebnis zu erstellen, ausgeführt. Die Komponente, welche ausgebildet ist, das jeweilige Attestierungsergebnis zu erstellen, ist auch als Attestierungsteilkomponente bezeichenbar.

In einer weiteren Weiterbildung der Erfindung wurden die mindestens zwei Attestierungsergebnisse jeweils erzeugt durch:
- ein Hashen einer von der jeweiligen App verwendeten oder zugehörigen Datei und/oder (z.B. Konfigurationsdatei der App, Programmbinärdateien der App, d.h. die der App lo-gisch zugeordnet sind oder aus denen die App besteht) und/oder
- ein Hashen einer von der jeweiligen App bereitgestellten Datei und/oder
- ein Ermitteln einer durch die jeweilige App erzeugten Konfigurationseinstellung des app-fähigen Systems, so kann die App z.B. eine eigene Konfigurationseinstellung generieren, die nicht das gesamte System, sondern nur sie selbst / einen Teil des Systems betrifft,
   und/oder
- ein Ermitteln einer durch die jeweilige App bereitgestellten Funktionalität (insbesondere durch Daten, die die App zur Laufzeit generiert und Rückschlüssel auf das App-Verhalten erlauben, insbesondere ausgeführte Sys-calls, generierte Logs, etc.) des app-fähigen Systems.

Der jeweilige Vertrauenswürdigkeitszustand der jeweiligen App der mindestens zwei Apps des app-fähigen Systems, welcher von dem jeweiligen Attestierungsergebnis attestiert wird, ist somit insbesondere abgeleitet von der oben genannten verwendeten oder zugehörigen Datei (z.B. abgeleitet von Konfigurationsdatei der App, Programmbinärdateien der App, d.h. die der App logisch zugeordnet sind oder aus denen die App besteht), der durch die jeweilige App erzeugten Konfigurationseinstellung und/oder der durch die jeweilige App bereitgestellten Funktionalität . Das Hashen ist jeweils insbeson-dere als ein Hashen einer Binärdatei, einer Programmbinärda-tei und/oder einer Konfigurationsdatei ausgebildet.

In einer weiteren Weiterbildung der Erfindung wurden die mindestens zwei Attestierungsergebnisse jeweils erzeugt durch:
- ein Bilden von kryptographischen Prüfsummen und/oder
- ein Vergleichen von kryptographischen Prüfsummen.

Die kryptographischen Prüfsummen betreffen insbesondere auf dem app-fähigen System installierte Software und Konfiguration. Über die kryptographischen Prüfsummen wird insbesondere abgeleitet, ob eine Bedingung der jeweiligen Attestierungsrichtlinie verletzt oder erfüllt wird.

In einer weiteren Weiterbildung der Erfindung ist die jeweilige Attestierungsrichtlinie als ein Smart Contract ausgebildet.

Über den Smart Contract ist festgelegt wie der Vertrauenswürdigkeitszustand zu bewerten ist.

In einer weiteren Weiterbildung der Erfindung gibt die jeweilige Attestierungsrichtlinie vor, dass in das jeweilige Attestierungsergebnis ein weiteres Attestierungsergebnis der mindestens zwei Attestierungsergebnisse einzubeziehen ist.

In ein Attestieren des jeweiligen Vertrauenswürdigkeitszustand einer App der mindestens zwei Apps des app-fähigen Systems (und in ein Erzeugen des jeweiligen Attestierungsergeb-nisses) wird somit ein weiteres Attestierungsergebnis, d.h. ein bereits vorhandenes Attestierungsergebnis, einer anderen App der mindestens zwei Apps des app-fähigen Systems einbezogen. So gibt die jeweilige Attestierungsrichtlinie insbesondere vor, dass in das jeweilige Attestierungsergebnis das weitere Attestierungsergebnis der mindestens zwei Attestierungsergebnisse einzubeziehen ist und das jeweilige Attestierungsergebnis den jeweiligen Vertrauenswürdigkeitszustand nur dann oder immer dann als positiv bewertet, wenn das weitere Attestierungsergebnis bereits positiv ist. So kann eine Attestierungsrichtlinie eines Betreibers insbesondere ein weiteres Attestierungsergebnis eines Herstellers / OEMs des app-fähigen Systems einbeziehen.

In einer weiteren Weiterbildung der Erfindung weist die Attestierungskombinationskomponente außerdem auf:
- eine Bereitstellungseinheit, ausgebildet das Attestierungsgesamtergebnis bereitzustellen.

Die Bereitstellungseinheit empfängt das Attestierungsgesamtergebnis insbesondere von der Kombinationseinheit oder ruft das Attestierungsgesamtergebnis insbesondere von der Kombinationseinheit ab. Anschließend stellt die Bereitstellungseinheit das Attestierungsgesamtergebnis insbesondere an das app-fähige System oder eine weitere Instanz, insbesondere ein anderes und/oder externes Gerät oder System, be-reit. So hat ein Betreiber des app-fähigen Systems Zugriff auf das Attestierungsgesamtergebnis.

In einer weiteren Weiterbildung der Erfindung ist das Attestierungsgesamtergebnis ausgebildet als:
- eine kombinierte Ausgabe der mindestens zwei Attestierungsergebnisse und/oder
- eine Interpretation in Textform der mindestens zwei Attestierungsergebnisse und/oder
- eine logische Verknüpfung der mindestens zwei Attestierungsergebnisse.

Die kombinierte Ausgabe der mindestens zwei Attestierungsergebnisse ist insbesondere als eine Ausgabe von Rohdaten der mindestens zwei Attestierungsergebnisse ausgebildet.

Die Interpretation in Textform der mindestens zwei Attestierungsergebnisse ist insbesondere als ein durch einen Menschen lesbarer Attestierungsbericht ausgebildet. So umfasst die Interpretation insbesondere Ausführungen wie "OEM Attestierung OK" und/oder "Betreiber Attestierung Not-OK".

Die logische Verknüpfung der mindestens zwei Attestierungsergebnisse ist insbesondere als eine logische AND-Operation ausgebildet. Auch kann in dem Attestierungsgesamtergebnis einem ersten der mindestens zwei Attestierungsergebnisse Priorität über einem anderen der mindestens zwei Attestierungsergebnisse gegeben werden und dem ersten Attestierungsergebnis mehr Gewicht im Attestierungsgesamtergebnis gegeben werden.

In einer weiteren Weiterbildung der Erfindung weist das Attestierungsgesamtergebnis einen zweiten kryptographischen Schutz auf.

Das generierte Attestierungsgesamtergebnis (Device Composite Attestation (DCA)) ist durch den zweiten kryptographischen Schutz kryptographisch geschützt. Insbesondere ist der zweite kryptographische Schutz als ein kryptographischer Schlüssel, welcher durch die Kombinationseinheit gebildet wurde, ausgebildet, insbesondere eine digitale Signatur, die unter Verwendung eines kryptographischen Schlüssels gebildet wird.

In einer weiteren Weiterbildung der Erfindung ist der Vertrauenswürdigkeitszustand als:
- ein Zustand hinsichtlich Integrität der jeweiligen App und/oder
- ein Zustand hinsichtlich Authentizität der jeweiligen App und/oder
- ein zu erwartender Zustand, insbesondere bekannter Zustand, der jeweiligen App
ausgebildet.

Der Vertrauenswürdigkeitszustand gibt somit an, ob die jeweilige App als integer und/oder authentisch bewertet wird und/oder ob die App in einem erwarteten Zustand, insbesondere bekannten Zustand, vorliegt.

Die Erfindung umfasst außerdem ein Attestierungssystem, aufweisend:
- die erfindungsgemäße Attestierungskombinationskomponente nach einem der vorherigen Ansprüche,
- eine Ladekomponente, ausgebildet mindestens zwei Attestierungsteilkomponenten zu laden, wobei die mindestens zwei Attestierungsteilkomponenten jeweils ausgebildet sind, eines der mindestens zwei Attestierungsergebnisse bereitzustellen, und
- eine Ausführungsumgebung, ausgebildet die mindestens zwei Attestierungsteilkomponenten auszuführen.

Die mindestens zwei Attestierungsteilkomponenten sind auch als Komponenten, welche ausgebildet sind, jeweils eines der mindestens zwei Attestierungsergebnisse bereitzustellen, bezeichenbar. Die mindestens zwei Attestierungsteilkomponenten sind insbesondere zur Laufzeit des Attestierungssystems ladbar. Die mindestens zwei Attestierungsteilkomponenten sind insbesondere ausgebildet als eine Programmlogik, insbesondere in Form eines Debian-Pakets, oder eines App-Pakets. Die Ausführungsumgebung und damit das Attestierungssystem ist insbesondere als IoT-Edge Gerät (z.B. Industrial Edge) ausgebildet.

Optional weist das Attestierungssystem die mindestens zwei Attestierungsteilkomponenten auf, optional werden die Attestierungsteilkomponenten noch (in die Ausführungsumgebung) geladen.

So kann beispielsweise ein OEM eine Attestierungsteilkomponente bereitstellen, die zur Prüfung der durch ihn auf das app-fähige System geladenen App (Applikation und Konfiguration) der mindestens zwei Apps verwendet werden kann. So kann z.B. auch nach einer Inbetriebnahme verifiziert werden, ob das app-fähige System gemäß der Konfiguration des OEMs noch als vertrauenswürdig betrachtet werden kann.

Die mindestens zwei Attestierungsteilkomponenten sind insbesondere kryptographisch signiert. In einer Variante werden zur Laufzeit geladene Attestierungsteilkomponenten nur akzeptiert und ausgeführt, wenn sie von einer durch das Attestierungssystem vertrauten Entität signiert wurden. Die Schlüssel und/oder Zertifikate zur Signaturprüfung können z.B. im Rahmen einer Systemkonfiguration (z.B. über NETCONF) und/oder eines Setups/Device-Onboardings auf das Attestierungssystem geladen werden. Attestierungsteilkomponenten können auch als Verifiable Credential oder als Verifiable Presentation bereitgestellt werden.

Im Weiteren können den Attestierungsteilkomponenten (insbesondere durch die Kombinationseinheit) Schnittstellen zum Ermitteln bestimmter Eigenschaften des app-fähigen Systems bereitgestellt werden. So können Attestierungsteilkomponenten mit geringeren Berechtigungen ausgeführt und der Zugriff auf bestimmte Eigenschaften und Informationen des app-fähigen Systems abstrahiert werden.

In einer Variante können Operationen einer Attestierungsteilkomponente vollständig mittels einer durch die Kombinationseinheit bereitgestellten Funktionalität abgedeckt werden. Eine Attestierungsteilkomponente formuliert dann die benötigten Informationen (z.B. "Hash von Datei XY") als Request an einen auf dem app-fähigen System vorhandenen Dienst, der die benötigten Daten (hier: Hash der Datei XY) ermittelt und als Response an die aufrufende Attestierungsteilkomponente zurückgibt. So kann eine klare Schnittstelle für das Programmieren von Attestierungsteilkomponenten bereitgestellt werden.

Weiterhin können Attestierungsteilkomponenten generell durch die Verwendung von Isolationsmechanismen des Betriebssystems des app-fähigen Systems (z.B. SELinux im Falle von Linux) so ausgeführt werden, dass sie nur lesenden Zugriff auf das Dateisystem sowie weitere Schnittstellen erhalten.

Die Erfindung umfasst außerdem ein app-fähiges System, aufweisend:
- ein erfindungsgemäßes Attestierungssystem nach Anspruch 12,
- eine Laufzeitumgebung für die mindestens zwei Apps.

Die Laufzeitumgebung für die mindestens zwei Apps ist ausgebildet, die mindestens zwei Apps auszuführen.

In einer weiteren Weiterbildung der Erfindung ist das erfindungsgemäße app-fähige System nach Anspruch 13, insbesondere ausgebildet als:
- ein app-fähiges Gerät und/oder
- ein industrielles Gerät und/oder
- eine Automatisierungskomponente und/oder
- eine industrielle Komponente.

Die Erfindung umfasst außerdem ein Verfahren zum Kombinieren von mindestens zwei Attestierungsergebnisse zu einem Attestierungsgesamtergebnis, mit den Schritten:
- ein Empfangen der mindestens zwei Attestierungsergebnisse, wobei die mindestens zwei Attestierungsergebnisse:
- jeweils einen Vertrauenswürdigkeitszustand einer App von mindestens zwei Apps eines app-fähigen Systems attestie-ren,
- jeweils nach einer Attestierungsrichtlinie attestieren und erzeugt wurden, wobei die jeweilige Attestierungsrichtlinie spezifisch für jene App der mindestens zwei Apps, deren Vertrauenswürdigkeitszustand attestiert wird, bereitgestellt wurde, und
- jeweils den Vertrauenswürdigkeitszustand unterschiedlicher Apps der mindestens zwei Apps attestieren,
   und
- das Kombinieren der mindestens zwei Attestierungsergebnisse zu dem Attestierungsgesamtergebnis.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

### Es zeigt

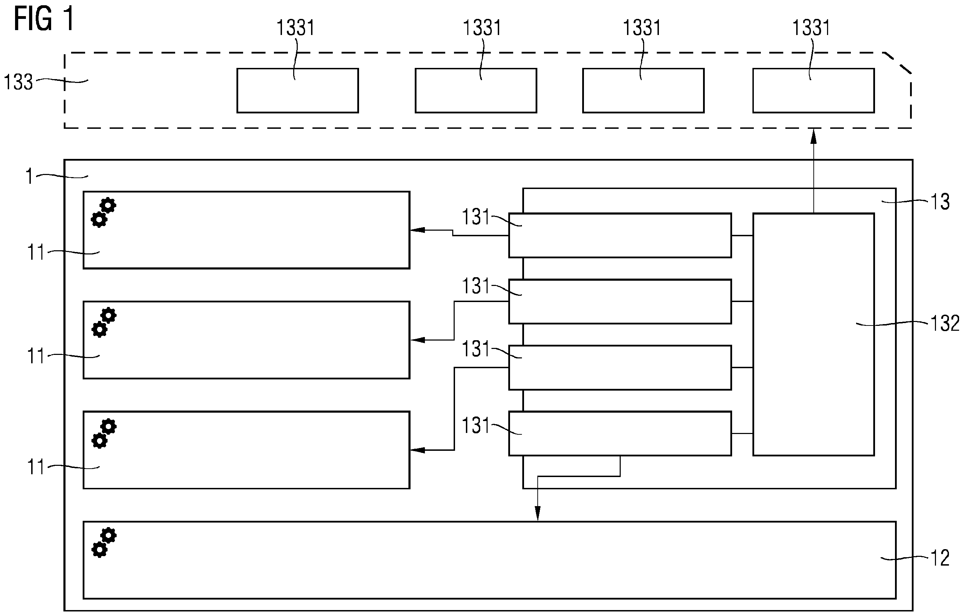

Fig. 1 eine schematische Darstellung eines erfindungsgemäßen app-fähigen Systems.

### DETAILLIERTE BESCHREIBUNG DER ERFINDUNG

Fig. 1 zeigt ein app-fähiges System 1, aufweisend:
- ein Attestierungssystem 13, aufweisend:
   o eine Attestierungskombinationskomponente 132 für das app-fähige System 1,
   o eine Ladekomponente, ausgebildet mindestens zwei Attestierungsteilkomponenten 131 zu laden, wobei die mindestens zwei Attestierungsteilkomponenten 131 jeweils ausgebildet sind, eines oder mehrere von mindestens zwei Attestierungsergebnissen 1331 bereitzustellen, und
   o eine Ausführungsumgebung, ausgebildet die mindes-tens zwei Attestierungsteilkomponenten 131 auszu-führen,
- eine Laufzeitumgebung für mindestens zwei Apps 11, und
- eine Systemsoftware 12 und Konfiguration 12 für das app-fähige System 1.

Das app-fähige System 1 ist insbesondere ausgebildet als:
- ein app-fähiges Gerät 1 und/oder
- ein industrielles Gerät 1 und/oder
- eine Automatisierungskomponente 1 und/oder
- eine industrielle Komponente 1.

Die Attestierungskombinationskomponente 132 des app-fähigen Systems 1, aufweisend:
- eine Empfangseinheit, ausgebildet die von den mindestens zwei Attestierungsteilkomponenten 131 bereitgestellten mindestens zwei Attestierungsergebnisse 1331 zu empfangen, wobei die mindestens zwei Attestierungsergebnisse 1331:
- jeweils einen Vertrauenswürdigkeitszustand einer App 11 der mindestens zwei Apps 11 des app-fähigen Systems 1 attestieren,
- jeweils nach einer Attestierungsrichtlinie attestieren und erzeugt wurden, wobei die jeweilige Attestierungsrichtlinie spezifisch für jene App 11 der mindestens zwei Apps 11, deren Vertrauenswürdigkeitszustand attes-tiert wird, bereitgestellt wurde, und
- jeweils den Vertrauenswürdigkeitszustand unterschiedlicher Apps 11 der mindestens zwei Apps 11 attestieren, und
- eine Kombinationseinheit, ausgebildet die mindestens zwei Attestierungsergebnisse 1331 zu einem Attestierungsgesamtergebnis 133 zu kombinieren.

Im Folgenden ist die Erfindung anhand eines konkreten Ausführungsbeispiels und der Darstellung in Fig. 1 genauer erläutert. Die zuvor mit Bezugszeichen eingeführten Komponenten sind im Folgenden durch beispielhafte Ausführungsformen beschrieben. Die Bezugszeichen wurden entsprechend weiterverwendet.

Bei der auf dem Gerät 1 geladenen Apps 11, insbesondere Software 11 und Konfiguration 11, (z.B. "Operator software & configuration" 11, "Integrator software & configuration" 11, "OEM software & configuration" 11, eine Systemsoftware 12 und Konfiguration 12 für das app-fähige Basis-System 1), kann es sich vor allem um Programmbinärdateien 11 und Konfigurationsdateien 11 handeln, die ein jeweiliger Akteur zur Anpassung der Gerätefunktionalität geladen hat. Auf einem Linuxbasierten, app-fähigen Gerät 1 (z.B. Industrial Edge Device 1), kann dies in Form von Debian-Paketen oder zur Laufzeit nachladbaren Apps 11 (Industrial Edge Apps 11) erfolgen.

Erfindungsgemäß befindet sich auf dem Gerät 1 nun eine Komponente 13, um das Erzeugen einer kombinierten Attestierung 133 zu ermöglichen ("Device Composite Attestation" 13 - DCA 13). Dabei werden die Attestierungsergebnisse 1331 der geladenen und konfigurierten ALCs 131 durch die Attestierungs-Kombinations-Logik 132 ("Attestation Result Composition Logic" 132 - ARCL 132) zusammengefasst und bereitgestellt. Bei den ALCs 131 (z.B. "Operator ACL" 131, "Integrator ACL" 131, "OEM ACL" 131, "Base system ACL" 131) kann es sich insbesondere um zur Laufzeit ladbare Programmlogik, z.B. in Form eines Debian-Pakets oder einer Industrial Edge App, handeln. ALCs 131 selbst bestehen aus Programmlogik, die eine Attestierungsrichtlinie realisieren (vgl. Smart Contract). So kann beispielsweise ein OEM eine ALC 131 bereitstellen, die zur Prüfung der durch ihn auf das Gerät 1 geladenen Applikationen 11 und Konfiguration 11 verwendet werden kann. So kann z.B. auch nach einer Inbetriebnahme verifiziert werden, ob das Gerät 1 gemäß der Konfiguration des OEMs noch als vertrauenswürdig betrachtet werden kann.

Es ist denkbar, dass jeder Akteur auch mehrere ALCs 131 bereitstellt.

Nach einem Ausführungsbeispiel werden dabei folgende Schritte ausgeführt:
- Laden von mindestens zwei Attestierungslogikkomponenten 131 (Attestation Logic Component 131 - ALC 131) auf ein System 1 (insbesondere ein Gerät 1 und/oder eine Automatisierungskomponente 1), von unterschiedlichen Akteuren / Stakeholdern, insbesondere von einem Gerätebauer (OEM), einem Betreiber (Operator), und/oder einem In-tegrator.
- Ausführen der mindestens zwei ALCs 131 durch eine "Device composite attestation Komponente" 13, wodurch je-weils mindestens eine spezifische, durch die jeweilige ALC 131 definierte Attestierungsrichtlinie auf dem Sys-tem 1 geprüft wird (vgl. Smart Contract), insbesondere durch:
   o das Hashen bestimmter Binär- und Konfigurationsda-teien,
   o Ermitteln bestimmter Konfigurationseinstellungen, etc.
- Generieren von jeweils einem ALC-spezifischen, kryptographisch geschützten Attestierungsergebnis 1331 durch die mindestens zwei ALCs 131.
- Generieren (durch die Attestation Result Composition Logic (ARCL) 132) eines kombinierten Attestierungsergeb-nisses 133, welches aus den Attestierungsergebnissen 1331 der mindestens zwei ALCs 131 resultiert.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Attestierungskombinationskomponente (132) für ein app-fähiges System (1), aufweisend:
- eine Empfangseinheit, ausgebildet mindestens zwei Attestierungsergebnisse (1331) zu empfangen,
wobei die mindestens zwei Attestierungsergebnisse (1331):
- jeweils einen Vertrauenswürdigkeitszustand einer App (11) von mindestens zwei Apps (11) des app-fähigen Sys-tems (1) attestieren,
- jeweils nach einer Attestierungsrichtlinie attestieren und erzeugt wurden, wobei die jeweilige Attestierungsrichtlinie spezifisch für jene App (11) der mindestens zwei Apps (11), deren Vertrauenswürdigkeitszustand at-testiert wird, bereitgestellt wurde, und
- jeweils den Vertrauenswürdigkeitszustand unterschiedlicher Apps (11) der mindestens zwei Apps (11) attestie-ren, und
- eine Kombinationseinheit, ausgebildet die mindestens zwei Attestierungsergebnisse (1331) zu einem Attestierungsgesamtergebnis (133) zu kombinieren.

2. Attestierungskombinationskomponente (132) nach Anspruch 1, wobei die mindestens zwei Attestierungsergebnisse (1331) jeweils einen ersten kryptographischen Schutz aufweisen.

3. Attestierungskombinationskomponente (132) nach einem der vorhergehenden Ansprüche,
wobei die mindestens zwei Attestierungsergebnisse (1331):
- jeweils von einer Attestierungsteilkomponente (131) erzeugt wurden, wobei die jeweilige Attestierungsrichtli-nie, welche spezifisch für jede App (11) der mindestens zwei Apps (11) bereitgestellt wurde, der Attestie-rungsteilkomponente (131) zugeordnet ist.

4. Attestierungskombinationskomponente (132) nach einem der vorhergehenden Ansprüche,
wobei die mindestens zwei Attestierungsergebnisse (1331) jeweils erzeugt wurden durch:
- ein Hashen einer von der jeweiligen App (11) verwendeten oder zugehörigen Datei und/oder
- ein Hashen einer von der jeweiligen App (11) bereitgestellten Datei und/oder
- ein Ermitteln einer durch die jeweilige App (11) erzeugten Konfigurationseinstellung des app-fähigen Systems (1) und/oder
- ein Ermitteln einer durch die jeweilige App (11) bereitgestellten Funktionalität des app-fähigen Systems (1).

5. Attestierungskombinationskomponente (132) nach einem der vorhergehenden Ansprüche,
wobei die mindestens zwei Attestierungsergebnisse (1331) jeweils erzeugt wurden durch:
- ein Bilden von kryptographischen Prüfsummen und/oder
- ein Vergleichen von kryptographischen Prüfsummen.

6. Attestierungskombinationskomponente (132) nach einem der vorhergehenden Ansprüche,
wobei die jeweilige Attestierungsrichtlinie als ein Smart Contract ausgebildet ist.

7. Attestierungskombinationskomponente (132) nach einem der vorhergehenden Ansprüche,
wobei die jeweilige Attestierungsrichtlinie vorgibt, dass in das jeweilige Attestierungsergebnis (1331) ein weiteres Attestierungsergebnis (1331) der mindestens zwei Attestierungsergebnisse (1331) einzubeziehen ist.

8. Attestierungskombinationskomponente (132) nach einem der vorhergehenden Ansprüche,
außerdem aufweisend:
- eine Bereitstellungseinheit, ausgebildet das Attestierungsgesamtergebnis (133) bereitzustellen.

9. Attestierungskombinationskomponente (132) nach einem der vorhergehenden Ansprüche,
wobei das Attestierungsgesamtergebnis (133) ausgebildet ist als:
- eine kombinierte Ausgabe der mindestens zwei Attestierungsergebnisse (1331) und/oder
- eine Interpretation in Textform der mindestens zwei Attestierungsergebnisse (1331) und/oder
- eine logische Verknüpfung der mindestens zwei Attestierungsergebnisse (1331).

10. Attestierungskombinationskomponente (132) nach einem der vorhergehenden Ansprüche,
wobei das Attestierungsgesamtergebnis (133) einen zweiten kryptographischen Schutz aufweist.

11. Attestierungskombinationskomponente (132) nach einem der vorhergehenden Ansprüche,
wobei der Vertrauenswürdigkeitszustand als:
- ein Zustand hinsichtlich Integrität der jeweiligen App (11) und/oder
- ein Zustand hinsichtlich Authentizität der jeweiligen App (11) und/oder
- ein zu erwartender Zustand, insbesondere bekannter Zustand, der jeweiligen App (11)
ausgebildet ist.

12. Attestierungssystem (13), aufweisend:
- die Attestierungskombinationskomponente (132) nach einem der vorherigen Ansprüche,
- eine Ladekomponente, ausgebildet mindestens zwei Attestierungsteilkomponenten (131) zu laden, wobei die min-destens zwei Attestierungsteilkomponenten (131) jeweils ausgebildet sind, eines der mindestens zwei Attestie-rungsergebnisse (1331) bereitzustellen, und
- eine Ausführungsumgebung, ausgebildet die mindestens zwei Attestierungsteilkomponenten (131) auszuführen.

13. App-fähiges System (1),
aufweisend:
- ein Attestierungssystem (13) nach Anspruch 12,
- eine Laufzeitumgebung für die mindestens zwei Apps (11).

14. App-fähiges System (1) nach Anspruch 13,
insbesondere ausgebildet als:
- ein app-fähiges Gerät (1) und/oder
- ein industrielles Gerät (1) und/oder
- eine Automatisierungskomponente (1) und/oder
- eine industrielle Komponente (1).

15. Verfahren zum Kombinieren von mindestens zwei Attestierungsergebnisse (1331) zu einem Attestierungsgesamtergebnis (133),
mit den Schritten:
- ein Empfangen der mindestens zwei Attestierungsergebnisse (1331),
wobei die mindestens zwei Attestierungsergebnisse (1331):
- jeweils einen Vertrauenswürdigkeitszustand einer App (11) von mindestens zwei Apps (11) eines app-fähigen Systems (1) attestieren,
- jeweils nach einer Attestierungsrichtlinie attestieren und erzeugt wurden, wobei die jeweilige Attestierungsrichtlinie spezifisch für jene App (11) der mindestens zwei Apps (11), deren Vertrauenswürdigkeitszustand at-testiert wird, bereitgestellt wurde, und
- jeweils den Vertrauenswürdigkeitszustand unterschiedlicher Apps (11) der mindestens zwei Apps (11) attestie-ren, und
- das Kombinieren der mindestens zwei Attestierungsergebnisse (1331) zu dem Attestierungsgesamtergebnis (133).
